# EUROPÄISCHE PATENTSCHRIFT

(11) **EP 2 457 864 B1**
(45) Veröffentlichungstag und Bekanntmachung des Hinweises auf die Patenterteilung: **03.01.2018**
(21) Anmeldenummer: 11009414.1
(22) Anmeldetag: 29.11.2011
(51) Int. Cl.: H02K 3/52, B66B 11/04, H02K 3/28

(54) **Aufzugsantrieb**
Lift drive
Entraînement d'ascenseur

(30) Priorität: 29.11.2010 DE 102010060859
(43) Veröffentlichungstag der Anmeldung: 30.05.2012
(73) Patentinhaber: Thyssenkrupp Elevator AG, 45143 Essen (DE)
(72) Erfinder: Herkommer, Jürgen, 70597 Stuttgart (DE); Held, Dieter, 72664 Kohlberg (DE); Daglioglu, Osman, 70499 Stuttgart (DE)
(74) Vertreter: Steinbauer, Florian

(56) Entgegenhaltungen:
- EP-A1- 1 947 755
- EP-A2- 1 834 917
- WO-A1-2006/042834
- DE-A1-102005 049 536
- US-A1- 2010 148 618

## Beschreibung

Die vorliegende Erfindung betrifft einen Aufzugsantrieb mit einem Elektromotor, der einen Rotor und einen Stator aufweist, mit einer Wickelkopfscheibe.

In Aufzugsanlagen werden unterschiedliche Antriebe verwendet, wie bspw. hydraulische Antriebe sowie Seil- oder Kabelantriebe. Weiterhin sind Elektromotoren in diesem Bereich weit verbreitet.

Da die Miniaturisierung von Aufzugsantrieben eine immer wichtiger werdende Forderung ist, werden zunehmend Synchronmotoren verwendet. Ein Hauptanliegen bei Aufzugsantrieben bleibt dabei die Verringerung von Kosten und Bauraum. Da zudem die Kosten für Rohmaterial und die Energiepreise steigen, werden Ausführungen, die einen optimierten Materialverbrauch und ein höheres Maß an Effizienz im Betrieb ermöglichen, angestrebt.

Aufgrund der dargelegten Anforderungen setzen sich Aufzugssysteme, die keinen Triebwerks- bzw. Maschinenraum erfordern, am Markt, der sich durch einen hohen Kostendruck auszeichnet, durch. Eine Installation von Aufzugssystemen im oberen Bereich des Aufzugsschachts ist jedoch aufgrund des begrenzten Raums schwierig. Daher sind kompakte Aufzugsantriebe erforderlich. Weiterhin werden ein niedriger Geräuschpegel, geringe Vibrationen und ein niedriger Grad an Drehmomentschwankungen für Aufzüge angestrebt. Dabei ist darauf zu achten, dass der verwendete Motor einen hohen Wirkungsgrad aufweist.

Aus der US 2010/0148618 A1 ist bspw. ein Stator für einen Elektromotor bekannt, der eine Art Wickelscheibe zur Bewicklung aufweist, wobei die Bewicklung dort nicht oder zumindest nicht effizient automatisch erfolgen kann.

Aus der EP 1 947 755 A1 ist ein Stator einer elektrischen Maschine bekannt, der eine Wickelkopfscheibe aufweist. Eine Bewicklung kann dort zwar automatisch erfolgen, jedoch nicht effizient für einen Betrieb der elektrischen Maschine bei hohen Spannungen.

Vor dem Hintergrund der aufgezeigten Anforderungen wird ein Aufzugsantrieb mit den Merkmalen des Anspruchs 1 beschrieben.

Es wird ein Aufzugsantrieb mit einem Elektromotor vorgestellt, der für einen Frequenzumrichterbetrieb ausgelegt ist und einen Rotor und einen Stator aufweist. Zur Ansteuerung des Elektromotors ist somit zumindest ein Frequenzumrichter vorgesehen. Außerdem ist eine Wickelkopfscheibe vorgesehen, die dazu ausgebildet ist, Eingänge und Ausgänge von Spulen jeder Phase des Elektromotors voneinander zu trennen. Weiterhin ist die Wickelkopfscheibe dafür vorgesehen, Phasen des Elektromotors zu trennen.

Es hat sich gezeigt, dass im Frequenzumrichterbetrieb bei einem Aufzugsantrieb sichergestellt sein muss, dass Eingänge und Ausgänge von Spulen jeder Phase des Elektromotors sowie die Phasen des Elektromotors voneinander getrennt sind. Hierzu dient die Wickelkopfscheibe, die einen sicheren Frequenzumrichterbetrieb in einem Aufzugsantrieb ermöglicht.

Weiterhin ist vorgesehen, dass zumindest einer von dem Rotor und dem Stator eine Wicklung in Form einer Nadelwicklung aufweist. Das bedeutet, dass der Rotor und/oder der Stator eine Wicklung in Form einer Nadelwicklung aufweist.

Nadelwicklungen werden bislang bei kleinen Gleichstromstellantrieben, insbesondere in der Fahrzeugindustrie, bspw. bei Fensterhebern und Scheibenwischermotoren, eingesetzt. Ein besonderer Vorteil der Nadelwicklung besteht in der hoch automatisierten Fertigung mit Nadelwickelautomaten. Dies ermöglicht eine automatisierte, schnelle und sichere Fertigung.

Bei dem beschriebenen Aufzugsantrieb wird nunmehr ein Einsatz in Drehstrom-Aufzugsmotoren, bspw. in einer Synchron- oder Asynchronmaschine, betrieben an Frequenzumrichtern mit variabler Ausgangsspannung und Frequenz, vorgestellt. Die Vorteile der Nadelwicklung sind u. a. ein deutlich verringerter Rohstoffeinsatz, da kürzere Spulen weniger Kupfer benötigen, ein verbesserter Wirkungsgrad sowie eine erhebliche Kostenreduktion im Betrieb und bei der Herstellung aufgrund verkürzter Fertigungszeiten bedingt durch einen höheren Grad an Automatisierung. Der Frequenzumrichter dient dabei insbesondere zur Drehzahl- und ggf. Positionsregelung.

Da bei der Stator- bzw. Rotorwicklung jeweils eine gemeinsame Nut für zwei Phasen vorgesehen ist, ist es von Vorteil in den betreffenden Nuten ein Isolationselement vorzusehen. Weiterhin zeigt sich, dass das Nadelwickelverfahren einen ausreichend großen Abstand zwischen benachbarten Zahnkanten erfordert und ein Spalt zwischen benachbarten Spulen nach dem Nadelwickeln verbleibt. Es könnte überlegt werden, von Anfang an ein Isolationselement im Bereich des nach dem Wickeln ausgebildeten Spalts vorzusehen. Allerdings ist festzustellen, dass ein in der Nut angeordnetes Isolationselement das Nadelwickeln behindern würde. Aus diesem Grunde ist in Ausgestaltung vorgesehen, dass bei dem vorgestellten Aufzugsantrieb in Nuten einführbare Isolationselemente zum Trennen verschiedener Phasen in Nuten vorgesehen sind, die nach dem Nadelwickeln eingeführt bzw. eingebracht werden können. Das bedeutet, dass die Isolationselemente nicht fest in den Nuten angeordnet sind, sondern in diese nachträglich eingebracht bzw. eingeführt werden können.

Als Isolationselemente können Keile in den Nuten eines Statorpakets und/oder Rotorpakets vorgesehen sein. Die Keile, die regelmäßig radial ausgerichtet sind, werden zweckmäßigerweise am Nutgrund eingeschoben. Diese Phasentrennung ist wichtig, da in einer Nut Spulenschenkel verschiedener Phasen liegen können. Die Keile sind insbesondere so ausgeformt, dass diese sicher unter die Drähte im Nutgrund eingeschoben werden können.

In einer möglichen Ausgestaltung ist der Elektromotor in eine Anzahl an Segmenten unterteilt, wobei jedem der Segmente ein Frequenzumrichter zugeordnet ist. Ein Segment umfasst typischerweise ein unabhängiges m-Phasen-System, das von einem Umrichter betrieben bzw. angesteuert wird. Das bedeutet, dass die von dem Aufzug benötigte Gesamtleistung durch die Anzahl der Segmente geteilt werden kann. Von jedem einzelnen Umrichter ist nur diese um das Verhältnis Gesamtleistung zu Anzahl der Segmente reduzierte Leistung aufzubringen. Auf diese Weise ist eine kostengünstigere Herstellung des Antriebs sowie aller in Zusammenhang mit dem Stator und Rotor benötigten Bauteile ermöglicht. Die Segmente können dabei galvanisch und/oder magnetisch voneinander getrennt sein.

Hinzu kommt, dass kleinere Umrichter einfacher mit höheren Schaltfrequenzen betrieben werden können, so dass der Antrieb leiser ist, da höhere Schaltfrequenzen eine geringere Geräuschentwicklung mit sich bringen. Dies ist insbesondere in der Nähe bewohnter Räume von Vorteil.

In einer möglichen Ausführung ist der Stator in umfänglicher Richtung in die Anzahl von Segmenten unterteilt. Außerdem kann der Rotor in umfänglicher Richtung in die Anzahl von Segmenten unterteilt sein.

Die Segmentierung ist im Falle einer geeigneten Wahl des Verhältnisses von Magnetpolen zu Stator- bzw. Rotornuten in Verbindung mit einer konzentrierten Wicklung von Vorteil. Diese wird auch als Einzahnwicklung bezeichnet.

Alternativ ist die Wicklung von Stator und/oder Rotor in Form einer verteilten Wicklung.

Der vorgestellte Aufzugsantrieb kann als Direktantrieb und somit getriebelos ausgeführt sein. Weiterhin kann der Elektromotor als Innen- oder Außenläufer ausgebildet sein. Die Wicklungen des Stators und/oder des Rotors können vollständig oder auch teilweise umgossen, d.h. abgedichtet, sein, bspw. mit einem Epoxidharz.

Grundsätzlich kann in dem Rotor und/oder Stator eine Einschicht- oder Zweischichtwicklung vorliegen, d.h. jeder zweite oder jeder Zahn ist umwickelt. Insbesondere bei einer Zweischichtwicklung bietet es sich an, wenn Isolationselemente, wie bspw. Keile, zum Trennen verschiedener Phasen in Nuten vorgesehen sind.

Wie bereits zuvor erwähnt, kann jede Spule der Rotor und/oder Statorwicklung in Form einer Einzahnwicklung vorliegen.

Die Verwendung einer Wickelkopfscheibe auf Verschaltungsseite ermöglicht die automatische Verdrahtung der Spulen einer Phase. Dies bewirkt eine verkürzte Fertigungszeit, einen verringerten manuellen Verdrahtungsaufwand und eine geringere Fehlerwahrscheinlichkeit.

Im Frequenzumrichterbetrieb ist zu beachten, dass eine Berührung der Spulenein- und -ausgänge einer Phase problematisch ist. Bei Niederspannungsantrieben, wie bspw. 12 Volt-DC-Stellantrieben in der Fahrzeugindustrie, stellt dies kein Problem dar. Dieses Problem wurde erkannt und dadurch gelöst, dass durch eine entsprechende Ausgestaltung der Wickelkopfscheibe mit Rillen zum Führen von Drähten verhindert wird, dass sich Spulenein- und -ausgänge einer Phase berühren.

Die Wickelkopfscheibe kann auf Schaltungs- und Nichtschaltungsseite Verwendung finden. Mit dieser sind ein minimaler Wickelkopf, ein niedriger Spulenwiderstand, eine kleine Verlustleistung und ein hoher Wirkungsgrad bei kompakter Baugröße möglich.

Die Wickelkopfscheibe, die auf Schaltungs- und Nichtschaltungsseite eingesetzt werden kann, ist in Ausgestaltung entsprechend mit Rillen versehen, um die erwünschte Trennung zu erreichen.

Der vorgestellte Aufzugsantrieb ermöglicht, zumindest in einigen der dargelegten Ausführungen, eine schnellere Herstellung, die bei geringeren Kosten durchgeführt werden kann. Der Verbrauch an Rohmaterial, insbesondere an Kupfer, wird gesenkt, da kleinere Spulen verwendet werden können. Eine verbesserte Laufruhe kann ebenfalls erreicht werden, während gleichzeitig ein effizienter Betrieb bei hohem Wirkungsgrad gegeben ist.

Weiter Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Figur 1: zeigt einen Ausschnitt einer Ausführungsform eines Stators mit Statorpaket in vereinfachter Darstellung.
- Figur 2: zeigt eine Nut des Statorpakets aus Figur 1 in einer vergrößerten Darstellung.
- Figur 3: zeigt einen Stator mit einer Wickelkopfscheibe.
- Figur 4: zeigt eine weitere Ansicht gemäß Figur 3.
- Figur 5: zeigt eine Wickelkopfscheibe gemäß Figuren 3 und 4 in einer vergrößerten Ansicht.
- Figur 6: zeigt eine Wickelkopfscheibe in einer Draufsicht.
- Figur 7: zeigt die Wickelkopfscheibe aus Figur 6 in einer perspektivischen Ansicht.

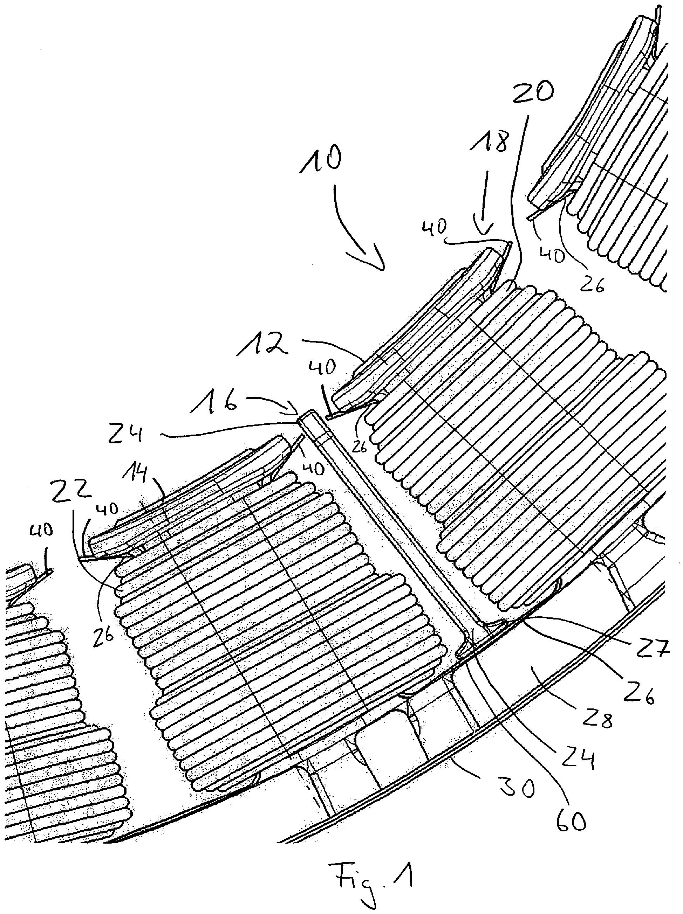

Figur 1 zeigt in vereinfachter Form einen Ausschnitt eines Stators, der insgesamt mit der Bezugsziffer 10 bezeichnet ist. Die Darstellung zeigt einen ersten Zahn 12, einen zweiten Zahn 14 und eine Nut 16, die zwischen dem ersten Zahn 12 und dem zweiten Zahn 14 vorgesehen ist. Eine Wicklung 18 des Stators 10 ist in Form einer Einzahnwicklung, d.h. jeder Zahn 12 und 14 ist mit einer Spule 20 bzw. 22 versehen.

Innerhalb der Nut 16 ist ein Isolationselement 24, in diesem Fall ein Keil, vorgesehen, das sicherstellt, dass die Spulen 20 und 22 voneinander getrennt sind. Der Keil 24 ist aus einem elektrisch nichtleitfähigen Material gefertigt und in radialer Richtung ausgerichtet. Um sicherzustellen, dass die galvanische Trennung der Spulen 20 und 22 sichergestellt ist, ist der Keil 24 direkt auf die Isolation 26 der Nut 16 aufgebracht. Zudem ist der Keil 24 in dem Bereich, der auf die Isolation 26 aufgebracht ist, mit einem verbreiterten Fuß 27 ausgebildet, so dass der Keil 24 sicher unter die Drähte der Spulen 20 und 22 eingeschoben werden kann.

Der Keil 24 ist somit nicht fest in der Nut 16 angebracht bzw. sogar einstückig mit dem Stator 10 ausgebildet, sondern kann im Rahmen der Herstellung nach der Wicklung eingebracht werden.

Die besondere Ausführung des Keils 24 bei dem dargestellten Stator 10 sichert den Kontakt des Keils 24 und der Isolation 26.

Es ist zu beachten, dass im Rahmen der Herstellung in einem Fertigungsschritt ein Stempel in den Stator 10 eingeführt wird, um eine Vergussmasse oder eine Substanz zum Imprägnieren einzubringen. Dies dient zum Vergießen bzw. Imprägnieren des Spulenraums. Hierzu kann ein sogenannter Stempel, der in den Innenraum eingeschoben wird, verwendet werden. Ist nunmehr der Keil 24 nicht direkt auf der Isolation 26 platziert, hat dies zur Folge, dass der Stempel nicht in den Stator 10 eingeführt werden kann. Auf diese Weise wird festgestellt, dass der Keil 24 nicht richtig eingeschoben ist.

Weiterhin zeigt die Darstellung eine Wickelkopfscheibe 28 mit einem Isolationsring 30. Der Isolationsring 30 isoliert Drähte, die in der Wickelkopfscheibe verlaufen, nach außen.

Die Spulen 20 und 22 werden auf die jeweiligen Zähne 12 und 14 aufgebracht, indem der Draht der Wicklung 18 geführt durch eine Nadel um die Zähne 12 und 14 gewickelt wird. Das Anbringen der Wicklung 18 kann bei Einsatz eines Nadelwickelautomaten deutlich schneller durchgeführt werden.

Darüber hinaus sind im Bereich der oberen Zahnkanten der Zähne 12 und 14 Endbereiche 40 der Isolation 26 umgebogen ausgeführt. In einer besonderen Ausgestaltung kann vorgesehen sein, dass die Keile 24 an ihrem oberen Ende eine Ausweitung aufweisen, die mit diesen Endbereichen 40 zusammenwirken und zwar derart, dass die Keile 24 nach unten hin zum Nutgrund 60 gedrückt werden.

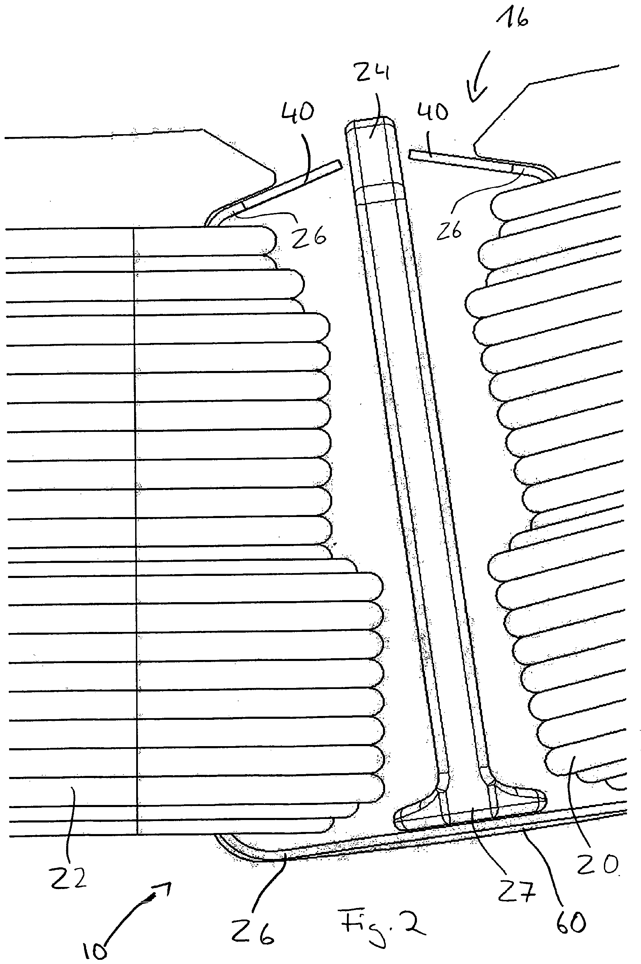

Figur 2 zeigt die Nut 16 des Stators 10 in einer vergrößerten Ansicht. Innerhalb der Nut 16 sind die beiden Spulen 20 und 22 vorgesehen, die durch den Keil 24 voneinander getrennt sind. Der Keil 24 befindet sich somit in einem Spalt zwischen den beiden Spulen 20 und 22 innerhalb der Nut 16. Weiterhin ist die Isolation 26 der Nut 16 gezeigt. Der Keil 24 ist direkt auf diese Isolation 26 in dem Bereich des Nutgrunds 60 der Nut 16 mit seinem Fuß 27 aufgebracht.

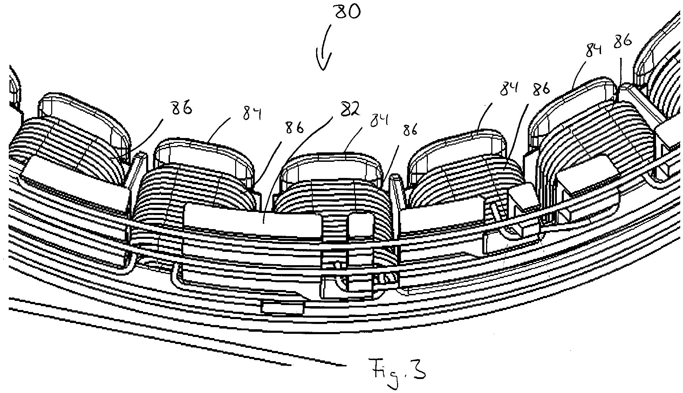

Figur 3 zeigt eine weitere Darstellung eines Stators 80, der mit einer Wickelkopfscheibe 82 versehen ist. Weiterhin sind Zähne 84 des Stators 80 jeweils mit einer Spule 86 versehen gezeigt.

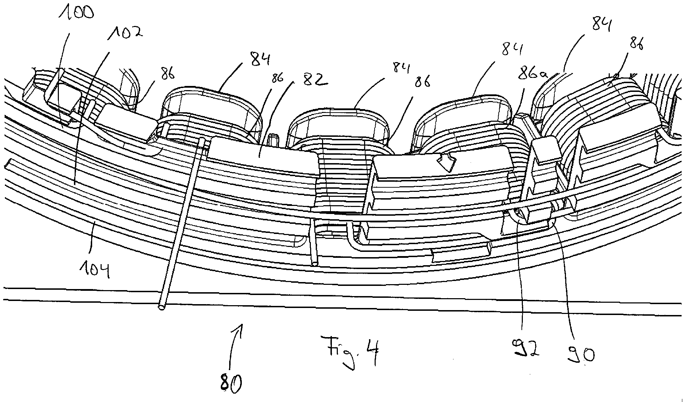

Figur 4 zeigt den Stator 80 gemäß Figur 3 in einer anderen Darstellung.

Die Wicklung des Stators 80 umfasst drei Phasen 100, 102 und 104. Ein Eingang 90 und ein Ausgang 92 der Spule 86a sind durch die besondere Konfiguration der Wickelkopfscheibe 82 getrennt. Insbesondere bei Konverterbetrieb ist zu verhindern, dass der Eingang 90 und der Ausgang 92 der Spule 86a sich berühren.

Dafür sichert die Wickelkopfscheibe 82, dass die drei Phasen 100, 102, 104 voneinander getrennt werden und dass der Eingang 90 und der Ausgang 92 der Spule 86a sich nicht berühren und verwickeln.

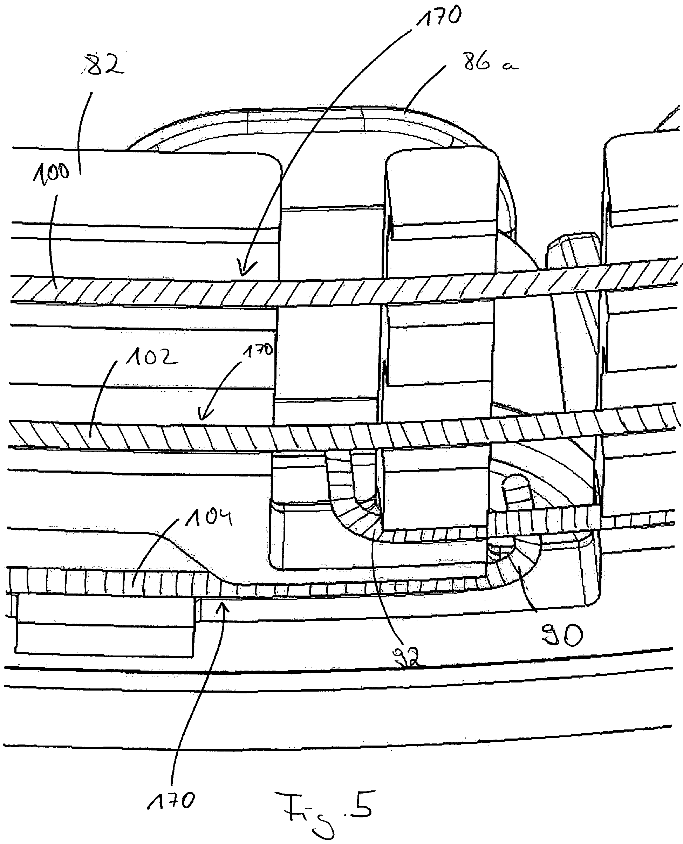

Figur 5 zeigt die Wickelkopfscheibe 82 gemäß den Figuren 3 und 4 in Verbindung mit der Spule 86a. Die Wickelkopfscheibe 82 trennt die drei Phasen 100, 102, 104 und den Eingang 90 und Ausgang 92 der Spule 86a. Hierfür sind Rillen 170 vorgesehen, in denen die Drähte der Phasen 100, 102, 104 geführt sind.

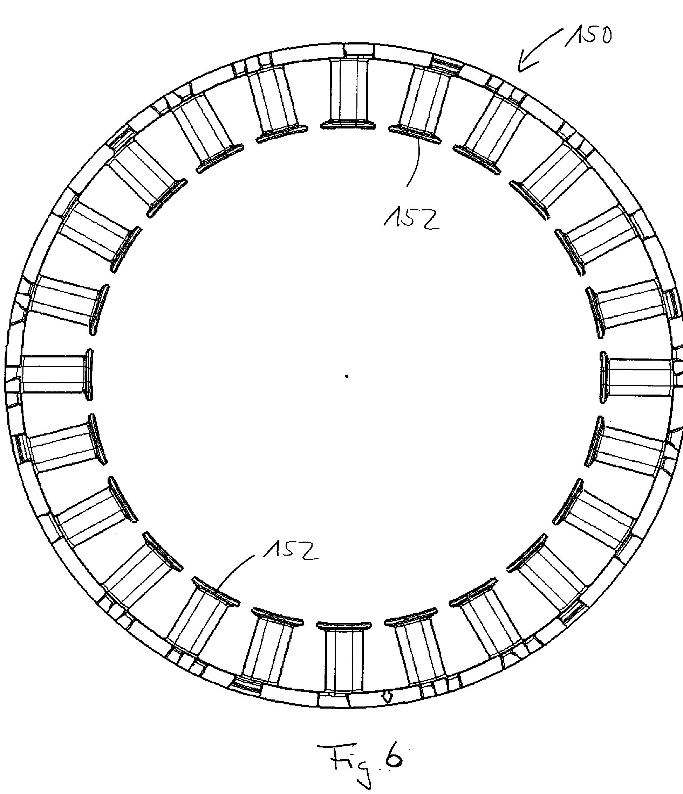

Figur 6 zeigt eine Ausführung der Wickelkopfscheibe 150 in einer Draufsicht. Diese Wickelkopfscheibe 150 umfasst eine Anzahl an Stegen 152, die an dem inneren Umfang der Wickelkopfscheibe 150 angeordnet sind und für Spulen der Wicklung vorgesehen sind.

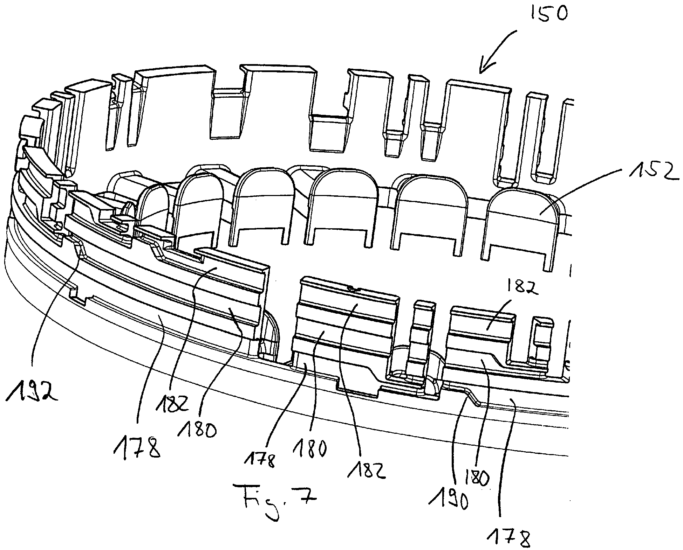

In Figur 7 ist ein Abschnitt der Wickelkopfscheibe 150 aus Figur 6 in einer perspektivischen Ansicht wiedergegeben.

Die Darstellung zeigt die Wickelkopfscheibe 150, die an ihrem inneren Umfang Stege 152 trägt, die angeformt und derart angeordnet sind, dass diese mit Zähnen eines Stators, auf den die Wickelkopfscheibe aufgesetzt wird, in Übereinstimmung sind. D.h. dass Spulen der Wicklungen sowohl um die Stege 152 als auch um die darunter liegenden Zähne gewickelt werden.

Weiterhin zeigt die Darstellung Rillen 178, 180, 182, die am äußeren Umfang der Wickelkopfscheibe 150 vorgesehen sind. Diese Rillen 178, 180, 182 ermöglichen die sichere Zuführung von Drähten für die Eingänge und Ausgänge von Spulen sowie die Trennung von Spulen jeder Phase des Elektromotors. Die Rillen 178, 180, 182 sind sogenannte breite Rillen, in denen die Drähte, üblicherweise zwei Drähte, pro Phase geführt werden können. Diese breite Rillen 178, 180, 182 können lediglich abschnittsweise unterteilt sein.

Bei den Rillen 178, 180, 182 sind Stufen 190, 192 vorgesehen, durch die ein geführter Draht, insbesondere im Bereich des Ein- oder Ausgangs einer Spule, innerhalb der Rille 178, 180, 182 angehoben oder abgesenkt werden kann.

Es können aber auch pro Phase zwei Rillen vorgesehen sein. Bei drei Phasen sind somit sechs Rillen vorgesehen. Es ist zu beachten, dass die für den Einsatz in einem Aufzugsantrieb erforderliche komplexe Wicklung, die ggf. ein mehrfaches Wechseln des Wicklungssinns und der Wicklungsrichtung erforderlich macht, die Verwendung einer komplexen Wickelkopfscheibe erforderlich macht. So ist es bspw. notwendig, Spulen um 180 Grad zueinander gedreht anzuordnen. Sind pro Phase zwei Rillen vorgesehen, weist die Rille, in die der Draht geführt wird, an der entsprechenden Stelle bspw. eine Aussparung hin zu der Rille auf, aus der heraus der Draht geführt wird. Alternativ weist die Rille, aus der heraus der Draht geführt wird, die Aussparung auf.

Sind pro Phase jeweils zwei Rillen vorgesehen, ist es möglich, den Ein- und den Ausgang einer Spule zu trennen, indem diese auf unterschiedlichen Höhen bzw. Niveaus durch getrennte Rillen geführt werden können. Der komplexe Wicklungsaufbau bedingt es nunmehr, dass ein Draht von einer Rille in die nächste überführt werden muss. Hierzu können bspw. in Rillen Stufen vorgesehen, die ein Wechsel eines Drahts von einer Rille in eine andere Rille ermöglichen. Durch diese Stufen können geführte Drähte von einer Rille in eine andere Rille angehoben oder auch abgesenkt werden.

Diese besonderen Ausführungen berücksichtigen, dass es bei dem vorgestellten Aufzugsantrieb erforderlich sein kann, Spulen der Phasen gedreht, typischerweise um 180 Grad gedreht, anzuordnen. Dies erfordert mindestens einen Wechsel des Wicklungssinns. Weiterhin kann auch mindestens ein Wechsel der Wicklungsrichtung erforderlich sein, wenn Spulen der Phasen bedarfsgerecht angeordnet werden sollen. Diese komplexe Wicklung bedingt eine komplexe Wickelkopfscheibe, die bspw., wie in Figur 7 dargestellt ist, mit Rillen 178, 180, 182 versehen ist, wobei in mindestens einer der Rillen 178, 180, 182 wenigstens eine Stufe 190, 192 vorgesehen ist, die bspw. dazu ausgebildet ist, einen Draht in der Rille 178, 180, 182 anzuheben oder abzusenken. Somit ist in Figur 7 die Ausführung mit drei breiten Rillen 178, 180, 182 gezeigt, bei der Drähte einer Phase jeweils in einer der Rillen 178, 180, 182, typischerweise in unterschiedlicher Höhe, geführt sind.

## Patentansprüche

1. Aufzugsantrieb mit einem Elektromotor, der für einen Frequenzumrichterbetrieb ausgelegt ist und einen Rotor und einen Stator (10, 80) aufweist,
bei dem zumindest einer von dem Rotor und dem Stator (10, 80) eine Wicklung (18) in Form einer Nadelwicklung aufweist;
bei dem Spulen der Phasen (100, 102, 104) so angeordnet sind, dass mindestens ein Wechsel der Wicklung in Sinn und/oder Richtung gegeben ist und
bei dem eine Wickelkopfscheibe (28, 82, 150) vorgesehen ist,
die dazu ausgebildet ist, Phasen (100, 102, 104) des Elektromotors voneinander zu trennen und Eingänge (90) und Ausgänge (92) von Spulen (20, 22, 86) jeder Phase (100, 102, 104) des Elektromotors voneinander zu trennen;
bei der Rillen (170, 178, 180, 182) am äußeren Umfang vorgesehen sind;
wobei die Rillen (170, 178, 180, 182) derart ausgbildet sind, dass ein Draht in unterschiedlicher Höhe in einer axialen Richtung in Bezug zu der Wickelkopfscheibe geführt werden kann;
wobei in mindestens einer der Rillen (170, 178, 180, 182) wenigstens eine Stufe (190, 192) vorgesehen ist;
wobei die wenigstens eine Stufe (190, 192) dazu ausgebildet ist, einen Draht innerhalb der Rille (170, 178, 180, 182) in Bezug auf die Höhe anzuheben oder abzusenken.

2. Aufzugsantrieb nach Anspruch 1, bei dem in Nuten (16) einführbare Isolationselemente (24) zum Trennen verschiedener Phasen (100, 102, 104) in den Nuten (16) vorgesehen sind.

3. Aufzugsantrieb nach Anspruch 2, bei dem die Isolationselemente (24) in den Nuten (16) eines Statorpakets vorgesehen sind.

4. Aufzugsantrieb nach Anspruch 2 oder 3, bei dem die Isolationselemente (24) in den Nuten (16) eines Rotorpakets vorgesehen sind.

5. Aufzugsantrieb nach einem der Ansprüche 1 bis 4, bei dem der Elektromotor in eine Anzahl an Segmenten unterteilt ist, wobei jedem der Segmente ein Frequenzumrichter zugeordnet ist.

6. Aufzugsantrieb nach Anspruch 5, bei dem der Stator (10, 80) in umfänglicher Richtung in die Anzahl an Segmenten unterteilt ist.

7. Aufzugsantrieb nach Anspruch 5 oder 6, bei dem der Rotor in umfänglicher Richtung in die Anzahl an Segmenten unterteilt ist.

8. Aufzugsantrieb nach einem der Ansprüche 1 bis 7, bei dem jede Spule (20, 22, 86) der Statorwicklung in Form einer Einzahnwicklung vorliegt.

9. Aufzugsantrieb nach einem der Ansprüche 1 bis 8, bei dem jede Spule (20, 22, 86) der Rotorwicklung in Form einer Einzahnwicklung vorliegt.

## Claims

1. Lift drive with an electric motor which is designed for a frequency converter operation and has a rotor and a stator (10, 80),
- wherein at least one of the rotor and stator (10, 80) has a winding (18) in the form of a needle winding;
- wherein coils of the phases (100, 102, 104) are arranged so that there is at least one change in the winding in terms of function and/or direction, and
- wherein a winding head disk (28, 82, 150) is provided, that is designed to separate phases (100, 102, 104) of the electric motor from each other and separate inputs (90) and outputs (92) of coils (20, 22, 86) of each phase (100, 102, 104) of the electric motor from each other;
- wherein grooves (170, 178, 180, 182) are provided in the outer perimeter;
- wherein the grooves (170, 178, 180, 182) are formed such that a wire can be guided at different heights in an axial direction with reference to the winding head disc;
- wherein at least one step (190, 192) is provided in at least one of the grooves (170, 178, 180, 182);
- wherein the at least one step (190, 192) is designed to lift or lower a wire within the groove (170, 178, 180, 182) with reference to the height.

2. The lift drive according to claim 1, wherein insulation elements (24) that can be inserted into the slots (16) are provided for separating different phases (100, 102, 104) in the slots (16).

3. The lift drive according to claim 2, wherein the insulation elements (24) are provided in the slots (16) of a stator core.

4. The lift drive according to claim 2 or 3, wherein the insulation elements (24) are provided in the slots (16) of a rotor stack.

5. The lift drive according to one of claims 1 to 4, wherein the electric motor can be divided into a number of segments, wherein each of the segments is assigned a frequency converter.

6. The lift drive according to claim 5, wherein the stator (10, 80) is divided into the number of segments in a peripheral direction.

7. The lift drive according to claim 5 or 6, wherein the rotor is divided into the number of segments in a peripheral direction.

8. The lift drive according to one of claims 1 to 7, wherein each coil (20, 22, 86) of the stator winding is in the form of a single tooth winding.

9. The lift drive according to one of claims 1 to 8, wherein each coil (20, 22, 86) of the rotor winding is in the form of a single tooth winding.

## Revendications

1. Entraînement d'ascenseur ayant un moteur électrique conçu pour un actionnement par un convertisseur de fréquence et comportant un rotor et un stator (10, 80),
dans lequel au moins un élément parmi le rotor et le stator (10, 80) comporte un enroulement (18) ayant la forme d'un enroulement d'aiguille ;
dans lequel des bobines de phases (100, 102, 104) sont agencées de manière à changer au moins le sens et/ou la direction de l'enroulement ; et
dans lequel est prévu un disque de tête d'enroulement (28, 82, 150) qui est formé de manière à séparer les phases (100, 102, 104) du moteur électrique les unes des autres et pour séparer des entrées (90) et des sorties (92) de bobines (20, 22, 86) de chaque phase (100, 102, 104) du moteur électrique les unes des autres ;
dans lequel des nervures (170, 178, 180, 182) sont prévues sur une circonférence extérieure ;
dans lequel les nervures (170, 178, 180, 182) sont formées de telle sorte qu'un fil peut être guidé à différentes hauteurs dans une direction axiale par rapport au disque de tête d'enroulement ;
dans lequel au moins un gradin (190, 192) est prévu dans au moins une des nervures (170, 178, 180, 182) ;
dans lequel le au moins un gradin (190, 192) est formé de manière à augmenter ou diminuer la hauteur d'un fil à l'intérieur des nervures (170, 178, 180, 182).

2. Entraînement d'ascenseur selon la revendication 1, dans lequel des éléments d'isolation (24) pouvant être placés dans les nervures (16) sont prévus dans les nervures (16) pour séparer différentes phases (100, 102, 104).

3. Entraînement d'ascenseur selon la revendication 1, dans lequel les éléments d'isolation (24) sont prévus dans les nervures (16) d'un bloc de stator.

4. Entraînement d'ascenseur selon la revendication 2 ou 3, dans lequel des éléments d'isolation (24) sont prévus dans les nervures (16) d'un bloc de rotor.

5. Entraînement d'ascenseur selon l'une des revendications 1 à 4, dans lequel le moteur électrique est subdivisé en une pluralité de segments, dans lequel un convertisseur de fréquence est couplé à chacun des segments.

6. Entraînement d'ascenseur selon la revendication 5, dans lequel le stator (10, 80) est subdivisé en la pluralité de segments dans une direction circonférentielle.

7. Entraînement d'ascenseur selon la revendication 5 ou 6, dans lequel le rotor est subdivisé en la pluralité de segments dans la direction circonférencielle.

8. Entraînement d'ascenseur selon l'une des revendications 1 à 7, dans lequel chaque bobine (20, 22, 86) de l'enroulement de stator a la forme d'un enroulement à une dent.

9. Entraînement d'ascenseur selon l'une des revendications 1 à 8, dans lequel chaque bobine (20, 22, 86) de l'enroulement de rotor a la forme d'un enroulement à une dent.
